# EUROPÄISCHE PATENTSCHRIFT

(11) **EP 3 039 196 B1**
(45) Veröffentlichungstag und Bekanntmachung des Hinweises auf die Patenterteilung: **01.07.2020**
(21) Anmeldenummer: 14766396.7
(22) Anmeldetag: 22.08.2014
(51) Int. Cl.: E04B 9/10, F16B 7/04

(54) **VERBINDUNGSELEMENT MIT PROFILSCHIENEN UND SYSTEM UMFASSEND ZWEI C-FÖRMIGE PROFILSCHIENEN UND EIN VERBINDUNGSELEMENT**
CONNECTING ELEMENT WITH PROFILE RAILS AND SYSTEM COMPRISING TWO C-SHAPED PROFILE RAILS AND A CONNECTING ELEMENT
ÉLÉMENT DE LIAISON AVEC GLISSIÈRES PROFILÉES ET SYSTÈME COMPRENANT DEUX GLISSIÈRES EN FORME DE C ET UN ÉLÉMENT DE LIAISON

(30) Priorität: 28.08.2013 DE 202013007676 U
(43) Veröffentlichungstag der Anmeldung: 06.07.2016
(73) Patentinhaber: Knauf Gips KG, 97346 Iphofen (DE)
(72) Erfinder: HUWER, Thomas, 55758 Oberreidenbach (DE)
(74) Vertreter: Zech, Stefan Markus
(86) Internationale Anmeldenummer: PCT/EP2014/002304
(87) Internationale Veröffentlichungsnummer: WO 2015/028131

(56) Entgegenhaltungen:
- EP-A1- 1 741 849
- DE-A1- 2 109 117
- DE-A1- 4 322 631
- DE-A1- 4 446 227
- DE-A1- 10 332 681
- DE-A1-102011 015 435
- FR-A1- 2 900 219

## Beschreibung

Die vorliegende Erfindung befasst sich mit einem Verbindungselement zum Verbinden von zwei auf Stoß fluchtenden C-förmigen Profilschienen, wobei das Verbindungselement als Blechprofil ausgebildet ist, dessen Querschnitt in Anpassung an die zu verbindenden Profilschienen derart ausgebildet ist, dass es unverlierbar von den Stirnseiten in die Profilschienen einschiebbar ist.

Derartige Verbindungselemente sind weitreichend bekannt, siehe z.B. DE 44 46 227 A. Sie sitzen in der Regel mit sehr geringem Spiel in den Profilschienen, um diese entsprechend weitestgehend frei von Spiel verbinden zu können. Mit Hilfe der Verbindungselemente ist es möglich, bei größeren Räumen Deckenkonstruktionen herzustellen, bei denen zur Überbrückung der Raumlänge mehrere Profilschienen fluchtend hintereinander angeordnet werden müssen. Ein Problem bei der Montage besteht darin, dass bei der Montage der letzten Profilschiene das Verbindungselement nur noch schlecht zugänglich ist. Insbesondere bei Profilschienen, deren Öffnung nach oben weist, muss der Monteur dann beispielsweise auf einer Leiter stehend das Verbindungselement blind verlagern, um die Verbindung zwischen den Schienen herzustellen. Da er optisch die Lage des Verbindungselementes nicht überprüfen kann, besteht zudem die Gefahr, dass das Verbindungselement nur unzureichend weit in die zuletzt angesetzte Profilschiene eingeschoben wird. Erschwert wird die Problematik noch dadurch, dass die Profilschienen relativ ungenau gefertigt sind, so dass gelegentlich das Verschieben einen hohen Kraftaufwand erfordert.

Die Aufgabe der vorliegenden Erfindung besteht darin, ein Verbindungselement zu schaffen, das eine einfachere Handhabung bei der Montage von Konstruktionen zum Abhängen von Decken erlaubt.

Erfindungsgemäß wird die Aufgabe durch ein Verbindungselement nach Anspruch 1 sowie durch ein System nach Anspruch 10 gelöst.

Es hat sich gezeigt, dass durch diese relativ einfache Maßnahme der Monteur auch bei verdeckter Lage des Verbindungselementes die Lasche ertasten und das Verbindungselement in die die Sicht verdeckende Profilschiene einschieben kann, wobei bei einem als Blechprofil ausgebildeten Verbindungselement die Lasche durch einfaches Umstellen einer Blechlasche ausgebildet werden kann. Die Lasche erlaubt es ihm auch, eine hinreichend große Kraft auf das Verbindungselement auszuüben und vermittelt dem Monteur ferner durch Ihre Lage eine Rückmeldung, wie weit das Verbindungselement in die zu montierende Profilschiene eingeschoben worden ist. Im übrigen bietet die Lasche auch beim Verbinden nicht verdeckter Profilschienen einen Handhabungsvorteil.

Vorzugsweise besitzt das Verbindungselement einen im wesentlichen C-förmigen Querschnitt, der mit entsprechend verminderten Abmessungen in die Profilschienen eingesteckt werden kann. Vorzugsweise sind weiterhin die seitlichen Schenkel des Verbindungselements durch einen Absatz in zwei Stufen getrennt ausgeführt. Diese Ausbildung hat den Vorteil, dass die seitlichen Schenkel einerseits bei Maßabweichungen federnd ausweichen können, wenn das Verbindungselement in die Profilschiene eingesteckt wird. Andererseits ergibt sich bei einer weiteren bevorzugten Ausführungsform die Möglichkeit, die Enden der Schenkel für eine flächige Anlage an der Innenseite der Schenkel der Profilschiene auszubilden. Dadurch wird es möglich, beispielsweise mit Hilfe eines Crimp-Werkzeuges in der Endstellung des Verbindungselementes die Profilschienen mit dem Verbinder dauerhaft durch Crimpen zu verbinden. Die gestufte Ausbildung der Schenkel bietet gegenüber abgewinkelten Schenkeln den Vorteil, dass das zusätzliche Crimpen als Befestigung vereinfacht wird, da eine besonders große Anlagefläche durch Vergrößerung der Höhe der Stufe ohne weiteres erreichbar ist.

Gemäß Anspruch 1 ist vorgesehen, dass an einer Halteplatte des Verbindungselementes, das heißt dem die Schenkel verbindenden Element auf der von diesen abgewandten Seite eine federnde Rastnase zum Einschnappen in die Fuge zwischen den Profilschienen vorgesehen ist. Eine derartige Rastnase, die beispielsweise als federnde Blechlasche ausgebildet sein kann, fixiert das Verbindungselement zumindest vorläufig in der Endstellung, wobei bei nach oben weisenden Schenkeln der Profilschiene und damit verdecktem Einbau des Verbindungselementes die in die Fuge einschnappende Rastnase dem Monteur auch eine optische Rückmeldung gibt, dass die Endstellung erreicht ist.

In einer weiteren bevorzugten Ausführungsform der Erfindung ist vorgesehen, dass an den Stirnseiten des Verbindungselements Schrägen oder Rundungen zum Erleichtern des Einschiebens in die Profilschiene vorgesehen sind. Derartige Schrägen oder Rundungen können beispielsweise durch umgestellte Blechlaschen an den Schenkeln oder im Bereich der Halteplatte zwischen den Schenkeln vorgesehen sein. Im Bereich des Absatzes zwischen den Stufen der Schenkeln kann ebenfalls eine Schräge vorgesehen sein, wobei in diesem Fall der Randbereich des Schenkels, der die Anlagefläche bildet, kürzer als der übliche Bereich der Schenkel ausgeführt ist.

Nachfolgend wird anhand der beigefügten Zeichnungen näher auf ein Ausführungsbeispiel der Erfindung eingegangen. Es zeigen:
- Fig. 1: eine Schrägansicht eines Verbindungselements;

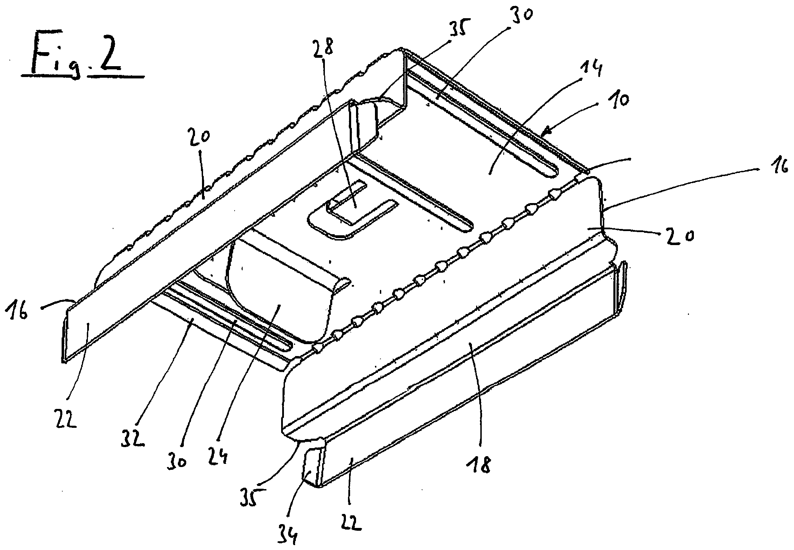

- Fig. 2: eine Schrägansicht des Verbindungselements aus Fig. 1 von unten;
- Fig. 3: eine Profilschiene mit eingeschobenem Verbindungselement mit einer zu verbindenden Profilschiene;
- Fig. 4: eine Ansicht der mit dem Verbindungselement in einer Endstellung befindlichen Montagestellung.

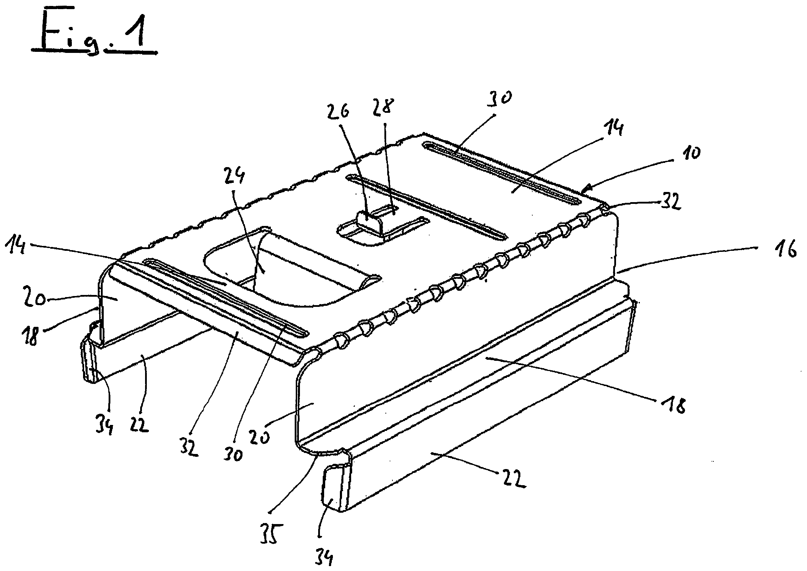

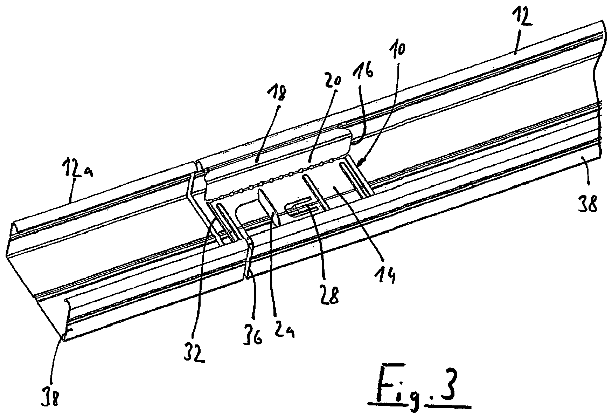

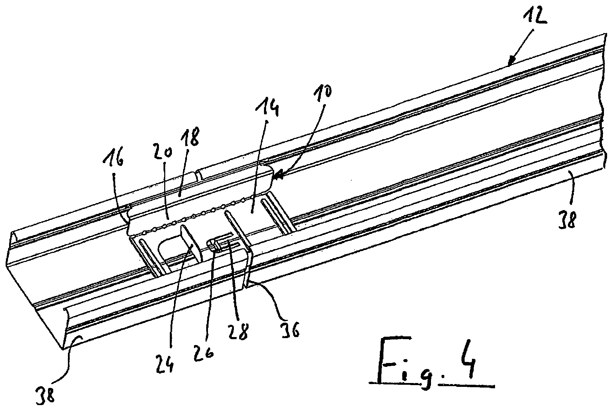

Fig. 1 zeigt ein Verbindungselement 10, das zum Verbinden von C-förmigen Profilschienen 12 (siehe Fig. 3 und 4) gedacht ist, wenn diese auf Stoß fluchtend zueinander liegen. Das Verbindungselement besitzt eine Halteplatte 14 mit seitlichen Schenkeln 16 und ist vollständig aus Blech einstückig geformt. Die seitlichen Schenkel sind durch Absätze 18 in einen Verbindungsbereiche mit kleinerem Abstand zueinander und Randbereiche 22 unterteilt, wobei der Abstand der Randbereiche 22 an die Breite der zu verbindenden Profilschienen angepasst ist, so dass sich die Außenflächen dieser Bereiche 22 flächig an die Innenseiten der Profilschienen anlegen können. Der stufige Aufbau der Schenkel ermöglicht ein elastisches Ausweichen der Randbereiche 22 nach innen, so dass im Ausgangszustand der Abstand der Außenflächen dieser Bereiche geringfügig größer sein kann als die innere Weite der Profilschienen. Insbesondere im Hinblick auf Maßtoleranzen bei den handelsüblichen C-förmigen Profilschienen kann dies von Vorteil sein, auch um die Schiebekräfte in den Profilschienen gleichmäßiger zu gestalten.

In der Halteplatte 14 ist eine Handhabungslasche 24 nach unten, d. h. zwischen die Schenkel 16 umgestellt. An der Oberseite ist eine Rastnase 26 ausgebildet, die an einer federnden Blechlasche 28 angeordnet ist. Weiterhin sind Querverstrebungen 30 erkennbar, die die Stabilität des Verbindungselements erhöhen.

An den Stirnseiten der Halteplatte 14 sind erste schräge Blechlaschen 32 vorgesehen, die ebenso wie zweite schräge Blechlaschen 34 an den Stirnseiten der Randbereiche 22 der Schenkel 16 dafür sorgen, dass sich das Verbindungselement einfacher in eine Profilschiene einschieben lässt. Die Randbereiche 22 der Schenkel 16 sind auch kürzer ausgeführt als die Bereiche 20 zwischen den Absätzen 18 und der Halteplatte 14, wobei die Stirnseiten der Absätze 18 entsprechend abgerundet, alternativ auch abgeschrägt sind, um ebenfalls das Einschieben in die Profilschiene zu vereinfachen.

Fig. 3 zeigt ein Verbindungselement, das in eine Profilschiene 12 eingeschoben ist. Die Abbildung zeigt eine Schrägansicht von oben, wobei die Profilschiene 12, in die das Verbindungselement 10 eingeschoben ist, bereits deckenseitig fixiert ist.

Die in Fig. 3 gezeigte zweite Profilschiene 12a, die ebenfalls bereits deckenseitig befestigt sein kann, ist auf Stoß ausgerichtet und soll dauerhaft fluchtend mit der anderen Profilschiene 12 verbunden werden. Hierzu kann der Monteur von oben in die Profilschiene 12 eingreifen und die Handhabungslasche 24 ertasten. Er kann nun das Verbindungselement 10 in die zu befestigende Profilschiene 12a einschieben, bis die Rastnase 26 in eine Fuge 36 zwischen den Profilschienen 12, 12a einrastet. Dieses Einrasten ist zum einen spürbar und bei der Ansicht von unten auch sichtbar, so dass der Monteur eine zuverlässige Rückmeldung erhält, dass das Verbindungselement in der optimalen Endstellung angekommen ist.

Um eine dauerhafte Verbindung zu erreichen ist es ohne weiteres möglich, eine Crimp-Zange anzusetzen, um die Randbereiche 22 der Schenkel 16 des Verbindungselements 10 dauerhaft mit Schenkeln 38 der Profilschiene zu verbinden.

## Patentansprüche

1. Verbindungselement zum Verbinden von zwei fluchtenden C-förmigen Profilschienen (12), wobei das Verbindungselement (10) als Blechprofil ausgebildet ist, dessen Querschnitt in Anpassung an die zu verbindenden Profilschienen (12) derart ausgebildet ist, dass es unverlierbar von den Stirnseiten in die Profilschienen (12) einschiebbar ist,
**dadurch gekennzeichnet, dass** an dem Verbindungselement eine nach dem Einschieben in eine Profilschiene (12) zugängliche Handhabungslasche (24) angeformt oder angebracht ist, wobei an einer Halteplatte (14) des Verbindungselements eine federnde Rastnase (26) zum Einschnappen in eine Fuge (26) zwischen den Profilschienen (12) vorgesehen ist.

2. Verbindungselement nach Anspruch 1, **dadurch gekennzeichnet, dass** es einen im wesentlichen C-förmigen Querschnitt mit der Halteplatte (14) mit zwei seitlich umgebogenen Schenkeln (16) aufweist.

3. Verbindungselement nach Anspruch 2, **dadurch gekennzeichnet, dass** die seitlichen Schenkel (16) des Verbindungselements zwei durch einen Absatz (18) gestufte Bereiche (20, 22) aufweisen.

4. Verbindungselement nach Anspruch 3, **dadurch gekennzeichnet, dass** die Enden (22) der Schenkel (16) zur flächigen Anlage an den Innenseiten der Schenkel (38) der Profilschienen (12) bestimmt sind.

5. Verbindungselement nach einem der vorhergehenden Ansprüche
**dadurch gekennzeichnet, dass** die Rastnase als federnde Blechlasche an der Halteplatte angeformt ist.

6. Verbindungselement nach einem der vorhergehenden Ansprüche,
**dadurch gekennzeichnet, dass** an den Stirnseiten Schrägen (32, 34) oder Rundungen (35) zum Erleichtern des Einschiebens in die Profilschienen (12) vorgesehen sind.

7. Verbindungselement nach Anspruch 6, **dadurch gekennzeichnet, dass** erste Schrägen oder Rundungen im Bereich der Halteplatte (14) des Verbindungselements durch abgewinkelte Blechlaschen (32) gebildet sind.

8. Verbindungselement nach Anspruch 6 oder 7, **dadurch gekennzeichnet, dass** zweite Schrägen oder Rundungen im Bereich der Enden (22) der Schenkel (16) durch nach innen umgestellte Blechlaschen (34) ausgebildet sind.

9. Verbindungselement nach einem der Ansprüche 6 bis 8,
**dadurch gekennzeichnet, dass** die Absätze (18) an den Stirnseiten Schrägen oder Rundungen (35) aufweisen, wobei die Enden (22) der Schenkel (16) kürzer sind als die zwischen der Halteplatte (14) und den Absätzen (18) liegen-den Bereiche (20).

10. System, umfassend zwei C-förmige Profilschienen (12) und ein Verbindungselement zum Verbinden der zwei C-förmigen Profilschienen (12), wenn diese miteinander fluchten, wobei das Verbindungselement (10) als Blechprofil ausgebildet ist, dessen Querschnitt in Anpassung an die zu verbindenden Profilschienen (12) derart ausgebildet ist, dass es unverlierbar von den Stirnseiten in die Profilschienen (12) einschiebbar ist, **dadurch gekennzeichnet, dass** an dem Verbindungselement eine nach dem Einschieben in eine Profilschiene (12) zugängliche Handhabungslasche (24) angeformt oder angebracht ist.

11. System nach Anspruch 10, **dadurch gekennzeichnet, dass** das Verbindungselement gemäß einem der Ansprüche 1 bis 9 ausgebildet ist.

12. System nach Anspruch 10, **dadurch gekennzeichnet, dass** das Verbindungselement einen im wesentlichen C-förmigen Querschnitt mit einer Halteplatte (14) mit zwei seitlich umgebogenen Schenkeln (16) aufweist.

13. System nach Anspruch 12, **dadurch gekennzeichnet, dass** die seitlichen Schenkel (16) des Verbindungselements zwei durch einen Absatz (18) gestufte Bereiche (20, 22) aufweisen.

14. System nach Anspruch 13, **dadurch gekennzeichnet, dass** die Enden (22) der Schenkel (16) zur flächigen Anlage an den Innenseiten der Schenkel (38) der Profilschienen (12) bestimmt sind.

15. System nach einem der Ansprüche 10 oder 12 bis 14,
**dadurch gekennzeichnet, dass** an den Stirnseiten Schrägen (32, 34) oder Rundungen (35) zum Erleichtern des Einschiebens in die Profilschienen (12) vorgesehen sind.

## Claims

1. A connecting element for connecting two aligned C-shaped profile rails (12), wherein the connecting element (10) is formed as a profile of sheet metal whose cross section is formed in adaptation to the profile rails (12) to be connected such that it is insertable from the front side into the profile rails (12) in a captive manner,
**characterized in that** on the connecting element, a handling tab (24) is molded or attached, which is accessible after the insertion into a profile rail (12), wherein a resilient latching lug (26) for snapping into a joint (26) between the profile rails (12) is provided on a holding plate (14) of the connecting element.

2. The connecting element according to claim 1, **characterized in that** it has a substantially C-shaped cross section together with the holding plate (14) having two laterally bent legs (16).

3. The connecting element according to claim 2, **characterized in that** the lateral legs (16) of the connecting element have two areas (20, 22) stepped by a step (18).

4. The connecting element according to claim 3, **characterized in that** the ends (22) of the legs (16) are intended for resting flat against the inner sides of the legs (38) of the profile rails (12).

5. The connecting element according to any one of the preceding claims, **characterized in that** the latching lug is molded on the holding plate as a resilient tab of sheet metal.

6. The connecting element according to any one of the preceding claims, **characterized in that**, at the front sides, inclinations (32, 34) or rounded shapes (35) are provided for facilitating the insertion into the profile rails (12).

7. The connecting element according to claim 6, **characterized in that** first inclinations or rounded shapes are formed in the area of the holding plate (14) of the connecting element by angled tabs (32) of sheet metal.

8. The connecting element according to claim 6 or 7, **characterized in that** second inclinations or rounded shapes are formed in the area of the ends (22) of the legs (16) by tabs (34) of sheet metal that are rearranged toward the inside.

9. The connecting element according to any one of claims 6 to 8, **characterized in that**, at the front sides, the steps (18) have inclinations or rounded shapes (35), wherein the ends of the legs (16) are shorter than the areas (20) situated in between the holding plate (14) and the steps (18).

10. A system, comprising two C-shaped profile rails (12) and a connecting element for connecting the two C-shaped profile rails (12), when these are aligned to one another, wherein the connecting element (10) is formed as a profile of sheet metal whose cross section is formed in adaptation to the profile rails (12) to be connected such that it is insertable from the front side into the profile rails (12) in a captive manner,
**characterized in that** on the connecting element, a handling tab (24) is molded or attached, which is accessible after the insertion into a profile rail (12).

11. The system according to claim 10, **characterized in that** the connecting element is formed according to any one of claims 1 to 9.

12. The system according to claim 10, **characterized in that** the connecting element has a substantially C-shaped cross section together with the holding plate (14) having two laterally bent legs (16).

13. The system according to claim 12, **characterized in that** the lateral legs (16) of the connecting element have two areas (20, 22) stepped by a step (18).

14. The system according to claim 13, **characterized in that** the ends (22) of the legs (16) are intended for resting flat against the inner sides of the legs (38) of the profile rails (12).

15. The system according to any one of claims 10 or 12 to 14, **characterized in that**, at the front sides, inclinations (32, 34) or rounded shapes (35) are provided for facilitating the insertion into the profile rails (12).

## Revendications

1. Élément de liaison pour la liaison de deux rails profilés (12) en forme de C en alignement, sachant que l'élément de liaison (10) est constitué comme profilé de tôle dont la section transversale est constituée en adaptation aux rails profilés (12) à relier de telle manière qu'il soit insérable dans les rails profilés (12) depuis les côtés frontaux sans pouvoir se perdre,
**caractérisé en ce qu'**une languette de manipulation accessible après l'insertion dans un rail profilé (12) est formée ou apposée sur l'élément de liaison, sachant qu'un ergot d'encliquetage (26) élastique destiné à s'engager dans une rainure (26) entre les rails profilés est prévu sur une plaque de maintien (14) de l'élément de liaison.

2. Élément de liaison selon la revendication 1, **caractérisé en ce qu'**il présente une section transversale sensiblement en forme de C avec la plaque de maintien (14) avec deux ailes (16) recourbées latéralement.

3. Élément de liaison selon la revendication 2, **caractérisé en ce que** les ailes (16) latérales de l'élément de liaison présentent deux zones (20, 22) étagées par un épaulement (18).

4. Élément de liaison selon la revendication 3, **caractérisé en ce que** les extrémités (22) des ailes (16) sont destinées à venir en appui surfacique sur les côtés intérieurs des ailes (38) des rails profilés (12).

5. Élément de liaison selon l'une des revendications précédentes, **caractérisé en ce que** l'ergot d'encliquetage est formé comme languette de tôle élastique sur la plaque de maintien.

6. Élément de liaison selon l'une des revendications précédentes, **caractérisé en ce que** des biseaux (32, 34) ou arrondis (35) sont prévus sur les côtés frontaux pour faciliter l'insertion dans les rails profilés (12).

7. Élément de liaison selon la revendication 6, **caractérisé en ce que** des premiers biseaux ou arrondis sont formés par des languettes de tôle (32) coudées dans la zone de la plaque de maintien (14) de l'élément de liaison.

8. Élément de liaison selon la revendication 6 ou 7, **caractérisé en ce que** des deuxièmes biseaux ou arrondis sont constitués par des languettes de tôle (34) rabattues vers l'intérieur dans la zone des extrémités (22) des ailes (16).

9. Élément de liaison selon l'une des revendications 6 à 8, **caractérisé en ce que** les épaulements (18) présentent des biseaux ou arrondis (35) au niveau des côtés frontaux, sachant que les extrémités (22) des ailes (16) sont plus courtes que les zones (20) situées entre la plaque de maintien (14) et les épaulements (18).

10. Système, comprenant deux rails profilés (12) en forme de C et un élément de liaison pour la liaison de deux rails profilés (12) en forme de C lorsque ceux-ci sont en alignement l'un avec l'autre, sachant que l'élément de liaison (10) est constitué comme profilé de tôle dont la section transversale est constituée en adaptation aux rails profilés (12) à relier de telle manière qu'il soit insérable dans les rails profilés (12) depuis les côtés frontaux sans pouvoir se perdre, **caractérisé en ce qu'**une languette de manipulation (24) accessible après l'insertion dans un rail profilé (12) est formée ou apposée sur l'élément de liaison.

11. Système selon la revendication 10, **caractérisé en ce que** l'élément de liaison est constitué selon l'une des revendications 1 à 9.

12. Système selon la revendication 10, **caractérisé en ce que** l'élément de liaison présente une section transversale sensiblement en forme de C avec une plaque de maintien (14) avec deux ailes (16) recourbées latéralement.

13. Système selon la revendication 13, **caractérisé en ce que** les ailes (16) latérales de l'élément de liaison présentent deux zones (20, 22) étagées par un épaulement (18).

14. Système selon la revendication 13, **caractérisé en ce que** les extrémités (22) des ailes (16) sont destinées à venir en appui surfacique sur les côtés intérieurs des ailes (38) des rails profilés (12).

15. Système selon l'une des revendications 10 ou 12 à 14, **caractérisé en ce que** des biseaux (32, 34) ou arrondis (35) sont prévus sur les côtés frontaux pour faciliter l'insertion dans les rails profilés (12).
